# EUROPEAN PATENT APPLICATION

(11) **EP 4 742 391 A1**
(43) Date of publication of application: **13.05.2026**
(21) Application number: 24211533.5
(22) Date of filing: 07.11.2024
(51) Int. Cl.: H01M 50/204

(54) **ASSEMBLY FOR BATTERY HOLDER COMPRISING A SEALING AGENT, AND BATTERY HOLDER FOR TRANSPORT VEHICLE**

(71) Applicant: Constellium UK Limited, Burnham, SL1 8DF (GB); Constellium Singen GmbH, 78224 Singen (DE)
(72) Inventor: BEN TAHAR, Mehdi, 38000 GRENOBLE (FR); BUTLER, Colin, BRACKLEY, NN13 6ER (GB)
(74) Representative: Constellium - Propriété Industrielle

(57) **Abstract**

The invention concerns an assembly (1) for battery holder comprising a first structural element (10) presenting a first contact surface (s10); a second structural element (30) presenting a second contact surface (s30) in direct contact with the first contact surface (s10); at least one mechanical fastener (50) securing the first structural element (10) with the second structural element (30); and an sealing agent (70) disposed inside a groove (20) defined between the second structural element (30) and the first structural element (10).

The invention also concerns an assembling method for assembling such an assembly (1) and a battery holder for a transport vehicle comprising such an assembly (1).

## Description

### TECHNICAL FIELD OF THE INVENTION

This invention relates to the field of electric or hybrid motorized transport vehicle, and more particularly to a battery holder intended to receive all or part of a battery to be supported by the battery holder.

More particularly, the invention relates to an assembly for such a battery holder.

### BACKGROUND

The state of the art described below presents applications in the field of electric or hybrid vehicles, but it could also relate to other fields or applications requiring the use of a battery holder.

It is known from the state of the art to use a battery enclosure presenting a structural frame designed to support the battery, and eventually to protect the battery cells or modules from damages in the event of side impact, or shock and from environmental ingresses. Said battery enclosure generally comprises the following elements:
- a circumferential structural frame usually fastened into the vehicle body structure using a bolting system;
- a floor closing the bottom of the frame and configured to receive all or part of the battery cells or modules;
- a lid made of plastic, steel or aluminum and placed on top of the above structure to seal completely the battery enclosure.

The role of said enclosure is to hold and protect the cells or the modules of the battery. However, depending on the needs, and depending on the type of battery cells or modules intended to be held by the battery holder, the shape for the overall structure of the frame can change drastically. Indeed, the battery system for an electric vehicle is built by a combination of individual cells. Generally, there are three main cell types which can determine the geometry, the size, the range as well as the vulnerability of the energy storage system. Consequently, the type of cells selected will influence the final design and shape of the battery enclosures.

A first main characteristic that a battery enclosure should have is that it needs to be sufficiently robust to reduce the chances of deforming when the vehicle is involved in a miss-use situation or in an accident. For this reason, the battery enclosure must have sufficient strength in order to reduce the chances of damaging internals of the enclosure, which could eventually cause serious damage to the vehicle and its surroundings.

A second primordial characteristics a battery enclosure must have is that it must meet standards that are mandatory, such as leak tightness. That is to say that no water or any other debris must penetrate the battery enclosure. A key parameter allowing to meet this requirement is to ensure a battery enclosure showing good flatness, especially to seal the lid on top of the above structure of the battery enclosure or the bottom floor to the bottom of the above structure.

The most common joining method to assemble the frame parts constituting the frame requires the use of welding to secure the frame parts with each other. This solution offers good mechanical resistance along with good fluid tightness. However, using welding to secure frame parts could raises post welding distortion between the frame parts, which could generate geometrical defect in the battery holder, in particular in the corners of the frame. Besides, in order to allow the flat positioning of the lid or of the floor, a post welding machining operation is often needed to remove the excess of material present at the level of the welding. Such post welding operation significantly increase the manufacturing time and the overall manufacturing cost of the battery holder.

An alternative joining method is fastening, namely bolting. It does solve the problem of post-welding distortion and machining but brings-in the challenge of sealing like for example the type of sealing agent, the volume of sealing agent, and in some cases the management of the excess of sealing agent.

Therefore, there is a need to find a cost-effective solution to design a battery holder showing improved mechanical resistance along with a good fluid tightness.

### SUMMARY OF THE INVENTION

The present invention aims at solving the aforementioned problems. To this end, the invention concerns an assembly for battery holder comprising:
- a first structural element extending in a first direction and presenting a first contact surface;
- a second structural element extending in a second direction distinct from the first direction, the second structural element presenting a second contact surface in direct contact with the first contact surface of the first structural element, the second structural element and the first structural element defining between them a groove surrounding the first contact surface and the second contact surface;
- at least one mechanical fastener securing the first structural element with the second structural element; and
- a sealing agent disposed inside the groove defined between the second structural element and the first structural element.

The provisions described above enable to design an assembly for battery holder showing improved mechanical resistance, and improved fluid tightness. Indeed, securing the first structural element with the second structural element allows to ensure a better mechanical resistance while minimizing torsion between the two structural elements. The presence of the sealing agent allows to ensure a fluid tightness of the assembly, which is particularly adapted to design frames for battery holders.

According to an embodiment, the assembly comprises on or more of the following features, taken alone or in combination.

According to one embodiment, the mechanical fastener comprises a fixing bolt.

Using a bolt allows to have a strong fixation of the first structural element with the second structural element, along with a possibility to remove the mechanical fastener. In other words, the fixing bolt allows a strong and reversible mechanical fixing between the first structural element and the second structural element.

According to one embodiment, the mechanical fastener comprises a rivet.

According to one embodiment, the groove presents a width which is comprised between 2 mm and 3 mm, preferably 2mm.

Thus, the groove is large enough to facilitate the deposition of the sealing agent, and thin enough to avoid a meniscus effect at the level of the groove compared to wide grooves, which limits the mechanical weakness at the level of the groove.

According to one embodiment, the groove presents a depth comprised between 2 mm and 5 mm, and preferably between 2 mm and 3 mm.

Thus, the groove is deep enough to ensure good fluid tightness and limit mechanical weakness at the level of the groove.

According to one embodiment, at least one structural element chosen between the first structural element and the second structural element comprises a shoulder which defines partially the groove.

Thus, the shoulder allows to define a gap to form the groove between the first structural element and the second structural element.

According to one embodiment, the shoulder comprises the first contact surface or the second contact surface.

Thus, the shoulder defines both the position of the direct contact between the first structural element and the second structural element, and the position of the groove.

According to one embodiment, the sealing agent comprises an adhesive, a sealant or a jointing agent. Advantageously the sealing agent remains deformable after curing, which means that the sealing agent is a soft and conformable (or malleable) element that can be compressed.

Thus, the sealing agent allows both to slightly reinforce the fixing of the first structural element with the second structural element, and to guarantee fluid tightness between the first structural element and the second structural element.

According to one embodiment, the sealing agent completely fills the groove defined between the second structural element and the first structural element

Thus, there is no possible ingress of a fluid or dust between the first structural element, and the second structural element.

According to one embodiment, the second structural element is a profile.

Thus, the manufacturing cost of the second structural element is reduced.

According to one embodiment, the second structural element is a hollow structural element presenting an internal wall and an external wall, said internal wall presenting the second contact surface and a second bearing surface opposite to the second contact surface; the at least one mechanical fastener comprising a bearing head leaning on the second bearing surface. Thus, securing the first structural element with the second structural element can be performed within the interior of the second structural element.

According to one embodiment said external wall may be cut to facilitate securing without reducing the strength of the assembly

The object of the invention may also be achieved by implementing a battery holder for a transport vehicle, the battery holder comprising a frame and a floor delimiting between them a housing intended to receive all or part of a battery, said frame comprising at least one assembly as described above.

The object of the invention may also be achieved by implementing an assembling method for assembling an assembly as described above, the assembling method comprising the following steps:
- a providing step, wherein the first structural element and the second structural element are provided;
- a fixing step, wherein the first contact surface and the second contact surface are placed in direct contact with each other, and wherein the at least one mechanical fastener is fixed to secure the first structural element with the second structural element;
- a sealing step, wherein the sealing agent is disposed inside the groove defined between the second structural element and the first structural element.

The provisions described above enable to assemble an assembly with improved mechanical resistance along with improved fluid tightness.

According to an embodiment, the assembling method comprises on or more of the following features, taken alone or in combination.

According to one embodiment, the sealing step is performed after the fixing step.

Thus, it is possible to fix the mechanical structure of the assembly before applying the sealing agent.

According to one embodiment, is performed by disposing the sealing agent at the level of the shoulder.

Thus, it is possible to perform the sealing step before, during or after the fixing step. The manufacturing process is therefore more adaptable.

According to one embodiment, during the sealing step, the sealing agent comprises an adhesive, the sealing step being performed before the fixing step.

Thus, the adhesive allows to perform a temporary fixing before bolting the first structural element with the second structural element.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents schematically a view in perspective of an assembly according to one embodiment of the invention.
Figure 2 represents schematically an exploded view of the assembly of figure 1.
Figure 3 represents schematically a cross sectional view of the assembly of figure 1.
Figure 4 represents schematically an assembling process according to one embodiment of the invention.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

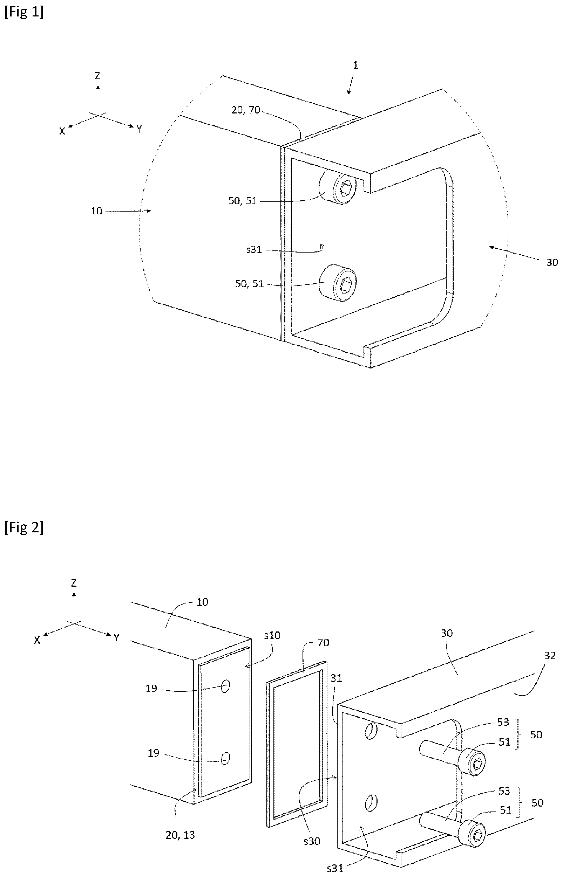

As illustrated on figures 1 to 3, the invention concerns an assembly 1 for battery holder, and a battery holder (not represented) for a transport vehicle. The battery holder comprises a frame and a floor delimiting between them a housing intended to receive all or part of a battery, and at least one assembly 1 according to the invention.

Figures 1 to 3 illustrate a non-limiting embodiment of an assembly 1 according to the invention.

The assembly 1 comprises a first structural element 10 extending in a first direction noted "Y" and presenting a first contact surface s10. Generally, the first structural element 10 may comprise a solid portion 11 disposed at an extremity of the first structural element 10. The first contact surface s10 can thus be disposed at an extremity of said solid portion 11. As described later, the presence of a solid portion 11 allows to simplify the cooperation of the first structural profile 10 with a mechanical fastener 50. To this end, holes 19 can be provided in the solid portion 11, for example threaded holes 19.

For example, the first structural element 10 is a profile, and notably, an extruded profile. It is possible that the structural element 10 is a hollow profile, excepted in the solid portion 11. The first structural element 10 may comprise or being constituted by aluminum, or an aluminum alloy. Thus, the manufacturing cost of the first structural element 10 is reduced.

The assembly 1 comprises further a second structural element 30 extending in a second direction, noted "X" distinct from the first direction Y. According to the variant represented on the figures, the second direction X may be perpendicular to the second direction Y. However, such a construction is not limiting, and it is possible that the first direction Y forms any angle with the second direction X, excepted 0° and 180°.

For example, the second structural element 30 is a profile, and notably, an extruded profile, preferably a hollow extruded profile. The second structural element 30 may comprise or being constituted by aluminum, or an aluminum alloy. Thus, the manufacturing cost of the second structural element 30 is reduced.

The second structural element 30 presents a second contact surface s30 in direct contact with the first contact surface s10 of the first structural element 10. In other words, the first contact surface s10 faces the second contact surface s30, with no intermediate elements disposed between the first contact surface s10 and the second contact surface s30.

It is possible that the second structural element 30 is a hollow structural element presenting an internal wall 31 and an external wall 32. The internal wall 31 may present the second contact surface s30 and a second bearing surface s31 opposite to the second contact surface s30. The external wall 32 may be cut to facilitate securing the first structural element 10 and the second structural element 20 without reducing the strength of the assembly.

The second structural element 30 and the first structural element 10 define between them a groove 20 surrounding the first contact surface s10 and the second contact surface s30. Generally, the groove 20 defines a peripheral contour in which the interface between the first contact surface s10 and the second contact surface 30 is inscribed.

Advantageously, the groove 20 may present a width w20 which is comprised between 2 mm and 3 mm, preferably 2mm. Thus, the groove 20 is large enough to facilitate the deposition of the sealing agent 70, and thin enough to avoid a meniscus effect at the level of the groove 20 compared to wide grooves 20, which limits the mechanical weakness at the level of the groove 20. Generally, the width w20 is a dimension of the groove 20 which separates the first structural element 10 from the second structural element 30 at the level of the groove 20. In the illustrated variant, the width w20 of the groove is counted along the first direction Y.

Besides, the groove 20 may present a depth d20 comprised between 2 mm and 5 mm, and preferably between 2 mm and 3 mm. Thus, the groove 20 is deep enough to ensure good fluid tightness and limit mechanical weakness at the level of the groove 20. Generally, the depth d20 is a dimension of the groove 20 counted from the interior of the first structural element 10 towards the exterior of the first structural element 10. In the illustrated variant, the depth d20 of the groove is counted along a third direction noted "Z" which is perpendicular to the first direction Y and to the second direction X. As a result, the first direction Y, the second direction X, and the third direction Z form an orthonormal frame of reference.

In this frame of reference, the first structural element 10 comprises a length counted along the first direction Y, a width counted along the second direction X, and a height counted along the third direction Z. Besides, the second structural element 30 comprises a length counted along the second direction X, a width counted along the first direction Y, and a height counted along the third direction Z.

In order to form the groove 20, it is possible that at least one structural element chosen between the first structural element 10 and the second structural element 30 comprises a shoulder 13 which defines partially the groove 20. Thus, the shoulder 13 allows to define a gap to form the groove 20 between the first structural element 10 and the second structural element 30, said gap being generally equal to the width w20 of the groove.

On figures 1 to 3, the shoulder 13 is formed on the first structural element 10, and forms the extremity of the solid portion 11, which comprises the first contact surface s10. It is well understood that the shoulder 13 may be included on the second structural element 30. In that case, the shoulder comprises the second contact surface s30. Thus, the shoulder 13 defines both the position of the direct contact between the first structural element 10 and the second structural element 30, and the position of the groove 20.

To ensure a strong mechanical fixing between the first structural element 10 and the second structural element 20, the assembly 1 comprises at least one mechanical fastener 50 securing the first structural element 10 with the second structural element 30. For example, said mechanical fastener 50 can be a rivet or a fixing bolt. Using a bolt allows to have a strong fixation of the first structural element 10 with the second structural element 30, along with a possibility to remove the mechanical fastener 50. In other word, the fixing bolt allows a strong and reversible mechanical fixing between the first structural element 10 and the second structural element 30.

On the variant represented on the figures, the at least one mechanical fastener 50 comprises two mechanical fasteners 50. Each mechanical fastener 50 may comprise a fixing rod 53 screwed into the threaded hole 19 of the first structural element 10, and a bearing head 51 attached to the fixing rod 53 and leaning on the second bearing surface s31 of the second structural element 30, so as to secure by pinching the first structural element 10 with the second structural element 30. Thus, securing the first structural element 10 with the second structural element 30 can be performed within the interior of the second structural element 30.

Finally, the assembly 1 comprises a sealing agent 70 disposed inside the groove 20 defined between the second structural element 30 and the first structural element 10. Generally, the sealing agent 70 completely fills the groove 20 defined between the second structural element 30 and the first structural element 10. Thus, there is no possible ingress of a fluid or dust between the first structural element 10, and the second structural element 30.

Advantageously, the sealing agent 70 is a soft and conformable element, such as an adhesive, a sealant or a jointing agent. Thus, the sealing agent 70 allows both to slightly reinforce the fixing of the first structural element 10 with the second structural element 30, and to guarantee fluid tightness between the first structural element 10 and the second structural element 30.

By "soft" it is meant that the sealing agent 70 remains deformable after curing and can be compressed. Advantageously, a soft sealing agent 70 can be conformed to the shape of the groove 20 even after curing and will ease the sealing of the top and bottom lids. For example, the sealing agent 70 is a polyurethane based sealing agent 70.

The provisions described above enable to design an assembly 1 for battery holder showing improved mechanical resistance, and improved fluid tightness. Indeed, securing the first structural element 10 with the second structural element 30 allows to ensure a better mechanical resistance while minimizing distortion between the two structural elements 10, 30. The presence of the sealing agent 70 allows to ensure a fluid tightness of the assembly 1, which is particularly adapted to design frames for battery holders.

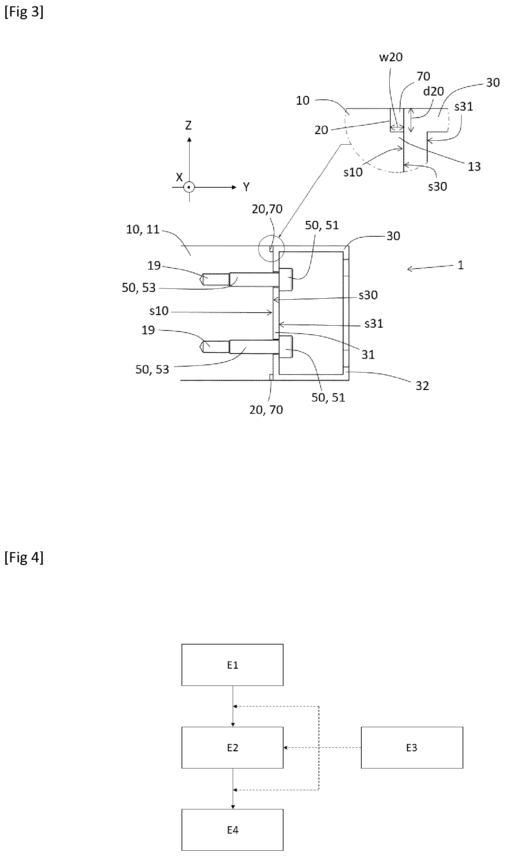

The invention also concerns an assembling method for assembling an assembly 1 as described above. Figure 4 illustrate a particular embodiment of such an assembling method.

The assembling method comprises first a providing step E1 wherein the first structural element 10 and the second structural element 30 are provided.

The assembling method also comprises a fixing step E2, wherein the first contact surface s10 and the second contact surface s30 are placed in direct contact with each other, and wherein the at least one mechanical fastener 50 is fixed to secure the first structural element 10 with the second structural element 30.

The assembling method also comprises a sealing step E3 wherein the sealing agent 70 is disposed inside the groove 20 defined between the second structural element 30 and the first structural element 10. Said sealing step E3 may be performed before, during or after the fixing step E2. The manufacturing process is therefore more adaptable

When the sealing step E3 is performed after the fixing step E2, it is possible to fix the mechanical structure of the assembly 1 before applying the sealing agent 70.

Alternatively, it is possible that the sealing step E3 takes place before the fixing step E2. Advantageously, this can ease the application of the sealing agent by providing easier access to the parts to be assembled.

Regardless of the variant considered, the sealing step E3 can be performed by disposing the sealing agent 70 at the level of the shoulder 13. The provisions described above enable to assemble an assembly 1 with improved mechanical resistance along with improved fluid tightness.

The assembling method may also comprise a cleaning step E4, performed after the sealing step E3, wherein any excess of sealing agent 70 is removed. Thus, it is possible to guarantee a flatness of the assembly 1 at the level of the groove 20, which allows to place the lid and the floor of the battery holder while limiting the risk of fluid ingress between the lid and the assembly 1, or between the floor and the assembly 1.

## Claims

1. Assembly (1) for battery holder comprising:
- a first structural element (10) extending in a first direction (Y) and presenting a first contact surface (s10);
- a second structural element (30) extending in a second direction (X) distinct from the first direction (Y), the second structural element (30) presenting a second contact surface (s30) in direct contact with the first contact surface (s10) of the first structural element (10), the second structural element (30) and the first structural element (10) defining between them a groove (20) surrounding the first contact surface (s10) and the second contact surface (s30);
- at least one mechanical fastener (50) securing the first structural element (10) with the second structural element (30); and
- a sealing agent (70) disposed inside the groove (20) defined between the second structural element (30) and the first structural element (10).

2. Assembly (1) according to claim 1, wherein the mechanical fastener (50) comprises a fixing bolt.

3. Assembly (1) according to any one of claims 1 or 2, wherein the groove (20) presents a width (w20) which is comprised between 2 mm and 3 mm, preferably 2mm.

4. Assembly (1) according to any one of claims 1 to 3, wherein the groove (20) presents a depth (d20) comprised between 2 mm and 5 mm, and preferably between 2 mm and 3 mm.

5. Assembly (1) according to any one of claims 1 to 4, wherein at least one structural element chosen between the first structural element (10) and the second structural element (30) comprises a shoulder (13) which defines partially the groove (20).

6. Assembly (1) according to claim 5, wherein the shoulder (13) comprises the first contact surface (s10) or the second contact surface (s30).

7. Assembly (1) according to any one of claims 1 to 6, wherein the sealing agent (70) comprises an adhesive, a sealant or a jointing agent.

8. Assembly (1) according to any one of claims 1 to 7, wherein the sealing agent (70) completely fills the groove (20) defined between the second structural element (30) and the first structural element (10)

9. Assembly (1) according to any one of claims 1 to 8, wherein the second structural element (30) is a profile.

10. Assembly (1) according to any one of claims 1 to 9, wherein the second structural element (30) is a hollow structural element presenting an internal wall (31), said internal wall (31) presenting the second contact surface (s30) and a second bearing surface (s31) opposite to the second contact surface (s30); the at least one mechanical fastener (50) comprising a bearing head (51) leaning on the second bearing surface (s31).

11. Battery holder for a transport vehicle, the battery holder comprising a frame and a floor delimiting between them a housing intended to receive all or part of a battery, said frame comprising at least one assembly (1) according to any one of claims 1 to 10.

12. Assembling method for assembling an assembly (1) according to any one of claims 1 to 10, the assembling method comprising the following steps:
- a providing step (E1), wherein the first structural element (10) and the second structural element (30) are provided;
- a fixing step (E2), wherein the first contact surface (s10) and the second contact surface (s30) are placed in direct contact with each other, and wherein the at least one mechanical fastener (50) is fixed to secure the first structural element (10) with the second structural element (30);
- a sealing step (E3), wherein the sealing agent (70) is disposed inside the groove (20) defined between the second structural element (30) and the first structural element (10).

13. Method according to claim 12, wherein the sealing step (E3) is performed after the fixing step (E2).

14. Method according to any one of claims 12 or 13, wherein the providing step (E1) comprises the provision of at least one structural element according to claim 5, the sealing step (E3) being thus performed by disposing the sealing agent (70) at the level of the shoulder (13).

15. Method according to claim 14, wherein during the sealing step (E3), the sealing agent (70) comprises an adhesive, the sealing step (E3) being performed before the fixing step (E2).
